# EUROPEAN PATENT SPECIFICATION

(11) **EP 0 551 949 B1**
(45) Date of publication and mention of the grant of the patent: **29.07.1998**
(21) Application number: 93200080.5
(22) Date of filing: 13.01.1993
(51) Int. Cl.: A01C 17/00

(54) **An implement for spreading material**
Gerät zum Streuen von Material
Outil pour épandre de la matière

(30) Priority: 15.01.1992 NL 9200063; 30.09.1992 NL 9201689
(43) Date of publication of application: 21.07.1993
(60) Divisional application: 98200078.8
(73) Proprietor: MAASLAND N.V., 3155 PD Maasland (NL)
(72) Inventor: Bom, Cornelis Johannes Gerardus, NL-3181 VC Rozenburg (NL); van der Waal, Pieter Jacob, NL-3145 LB Maassluis (NL)
(74) Representative: Mulder, Herman

(56) References cited:
- EP-A- 0 127 922
- EP-A- 0 347 643

## Description

The invention relates to an implement for spreading material, comprising at least two spreader members which are each drivable in opposite directions away from each other, as seen from the front of the implement about an upwardly extending rotary shaft, the spreader members being contiguous to at least one discharge member, by which during operation of the implement the material to be spread can be fed to the spreader members, the spreader members and the discharge member being of such a design and/or being arranged such relative to each other that in operation each one of the spreader members spreads the material at least substantially equally far to both sides of a plane which extends into the normal direction of travel of the implement and is located substantially halfway between the spreader members, the implement further comprising a guide member which is applicable about at least a portion of the circumference of one of the spreader members, along which portion the material is spreadable in operation by the spreader members, said guide member comprising a plurality of guide elements, the guide elements being mounted such that they are able to collect at least that portion of the material that is spread by the spreader member in a direction towards one side of the centre longitudinal plane and to divert the direction of spread of this material in such a manner that this material is spread near and towards the other side of the centre longitudinal plane, the guide member being attached to the implement in such a manner that it can optionally be adjusted to one of at least two different working positions, in which it is contiguous to the spreader member circumference and in which material is to be spread over a strip along a field edge without material being spread beyond this field edge.

Such an implement is known from EP-A1-0347643.

This implement has the disadvantage that the guide member is not adaptable to different kinds of spreading material. When e.g. there will be spread material of a kind that moves more quickly over the spreading member, then the first guide element, seen in the direction of rotation of the spreading member, will receive to much material, as a result of which the distribution pattern is disturbed.

It is an object of the invention to improve an implement of this type in such a way that the abovementioned disadvantages are overcome or at least mitigated.

According to the invention, this can be accomplished when the guide member is adjustable in a direction at least substantially perpendicular to the centre longitudinal plane of the implement.

The implement according to the invention has the advantage that it is adaptable to different kinds of spreading material.

In accordance with a further embodiment, the guide member connects to at least approximately half of the circumferential angle of the spreader member, through which the material is spread by the spreader member during operation. An advantageous construction of the guide member is obtained, when it includes a plate-like carrier provided at the upper side of the guide elements. The operation of the guide member is advantageously influenced, when the spaces between the guide elements in a direction towards their bottom ends are at least substantially open. In this manner, clogging of the material between the guide elements can be prevented in a simple manner.

The invention further relates to a guide member as described above and intended for use with an implement as described above.

For a better understanding of the invention and to show how the same may be carried into effect, reference will now be made, by way of example, to the accompanying drawings of an embodiment of the invention, in which drawings:
Figure 1 is a plan view of an embodiment of the implement in accordance with the invention, in which the hopper of the implement has been omitted, and
Figure 2 is a side view of a connection of the guide member in accordance with the invention.

The invention relates to an implement for spreading material over a surface area, more specifically for spreading material, such as, for example, fertilizer over agricultural fields. Usually, the implement in accordance with the invention spreads the material during travel over the surface to be spread to both sides of the longitudinal axis of the implement through equal distances. In this situation, the material can be spread over a strip having a width of, for example, approximately 48 metres. Depending on the material to be spread and the manner in which the implement is further designed, this width may be different or be chosen differently, respectively. The implement may be a self-propelled machine or, as in the embodiment shown, an implement which can be mounted to a tractor or a suchlike vehicle.

The implement is couplable to a tractor, by means of which it is moved during operation over the surface to be spread.

The implement in accordance with the invention has in the embodiment shown, two spreader members which can each be caused to rotate during operation about respective rotary shafts. The spreader members are located transversely to the longitudinal axis of the implement in a side-by-side relationship and on either side of said longitudinal axis. The implement includes a frame, to which a hopper is attached. During operation, the material to be spread is supplied from the hopper to the spreader members, which each, during normal operation, spread the material at least substantially through the overall spread width and on both sides of the longitudinal axis of the implement over at least substantially equal distances.

During operation, the material is spread on opposite sides of the centre longitudinal plane of the implement. The centre longitudinal plane is located halfway between the two spreader members and parallel to the rotary shafts, which extend parallel to each other.

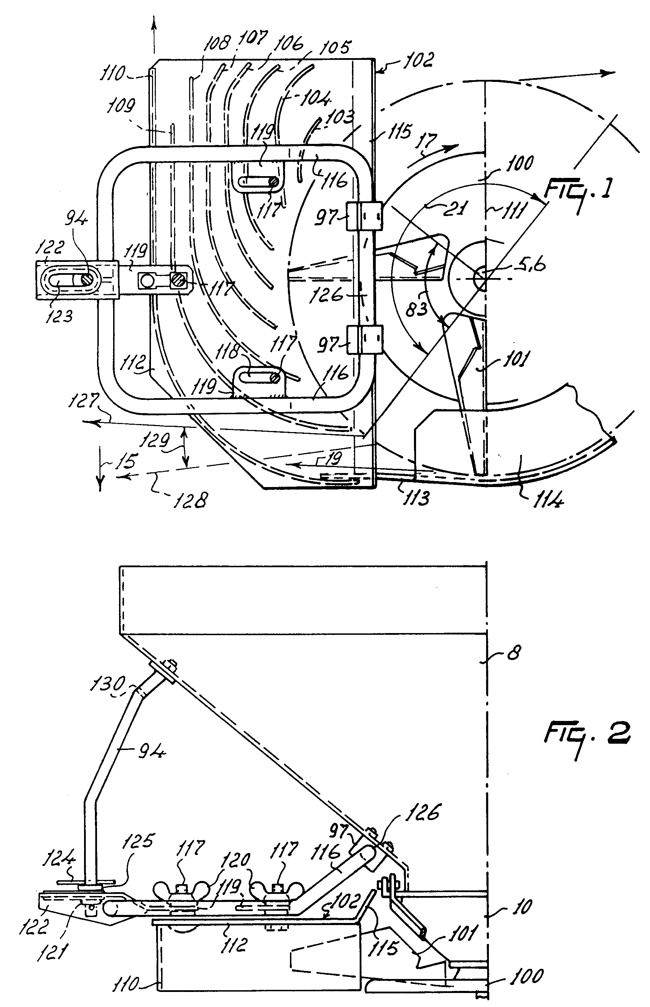

Figures 1 and 2 show an embodiment of a guide member 102, according to the invention. The guide member 102 according to Figures 1 and 2 adjoins around a part of the circumference of a rotatable spreading member 100. This spreading member 100 is mounted in an implement for spreading material. The spreading member 100 has spreading arms 101 which are situated radially with regard to the axis of rotation of the spreading member. The use of the guide members is possible with spreading members which can have spreading arms of a form which are chosen in a preferred way. The position of the guide member in the implement or the form of the guide member with the guide elements can be chosen more or less in dependence on the form of the spreading member with its spreading arms.

The guide member 102 according to the embodiment of Figures 1 and 2 is provided with eight spreading elements 103 to 110 inclusive. Owing hereto, the material picked up by the guide member 102 can be divided more accurately over the surface to be spread. Seen in plan view and in the operative position of the guide member, each of the guide elements has a part extending straight and parallel to the plane of symmetry of the implement, respectively parallel to the plane 111, which plane 111 encloses the axis of rotation of the spreading member 100 and is parallel to the plane of symmetry. The ends of the guide elements 105 to 110 inclusive, which inner ends are directed to the spreading member 100, are bent from their respective straight parts, which are parallel to the plane 116, respectively to the normal direction of movement 15 of the implement in the direction of the spreading member. These bent inner ends of the spreading elements 105 to 107 extend obliquely forwards in the direction of the plane, as follows from Figure 1. The inner ends of these bent parts of the guide member 109 and 110 extend at least nearly perpendicularly to the plane 111. The outer ends of the guide elements 108, 109 and 110, which outer ends are turned away from the spreading member 100, extend parallel to the plane 111. The outer ends of the guide elements 103 to 107 inclusive, which outer ends are turned away from the spreading member 100, are bent in such a way that they extend obliquely rearwardly, with regard of the direction 15, in the direction of the plane 111, as is shown in Figure 1.

The guide elements 103 to 110 inclusive are connected with their upper sides to a supporting plate 112. The guide elements extend freely downwards from the plate 112. The supporting plate 112 extends at least nearly perpendicularly to the plane 111 in the position of operation of the guide member 102. The front side of the supporting plate 112 is extending forwardly of an extension 113 provided to a guide means adjoining the spreading member 100. The extension 113 extends in a direction from the plane 111 along the guide member 110 at that side of this guide member which is directed to the guide member 109 in a way as is shown in Figure 1. The side of the supporting plate 112 directed to the plane 111 is provided with a rim 114 extending obliquely upwardly in a direction of the plane 111. The supporting plate 112 is straight and situated at a slightly higher level than the upper side of the spreading member 100. The guide member 102 is mounted to a carrier bracket 116. This bracket is hingeably mounted to carrier elements 97 connected to the hopper 8. The guide member 102 is provided with bolts 117, the ends of which extend through longitudinal holes 118 in plate-like supports 119 of the carrier bracket 116. The longitudinal holes 118 extend perpendicularly to the plane 111, as seen in plan view according to Figure 1. The bolts 117, and with them the guide member 102, can be fixed in their position relative to the support 119 through the intermediatery of wing-like nuts 120 provided on the bolt 117 or other fixing means which can be operated easily. In the operative position of the guide members 102, the supporting means 119 extends parallel to the spreading member 100. By shifting the bolts 117 in the oblong holes 118, the guide member 102 can be adjusted in a direction perpendicular to the plane 111 and parallel to the spreading member 100. The guide member 102 can be fixed at will in one of at least two different distances from the spreading member 100 and from the plane 111. The carrier bracket 116 is mounted to the hopper 8 by means of the carrier elements 107 and a fastening element 94 connected to the hopper 8. As is shown in Figure 2, in its position of operation the guide member 102 rests with the carrier bracket 116 on a ring 121 which is fastened to the fastening element 94. The carrier bracket 116 is provided with an outstanding lip 122 which is provided with an oblong hole 123, through which the fastening element 94 is extending. As shown in Figures 1 and 2, the operative position of the guide member is fixed by a clip 124 which can be detached easily from the fastening element 94. The clip 124 is situated in the operative position of the guide member 102 above the ring 125 mounted around the fastening element 94 and lying above the lip 122.

The guide member 102 can be taken out of its position of operation, which position is shown clearly in Figure 2, by loosening the clip 124 from the fastening element 94. Then the carrier bracket 116 with the guide member 102 can be hinged around the centre line of the part 126 of the carrier bracket 116 in the supporting elements 97. Hereby the outstanding lip 122 can be moved along the fastening element 94 in an upward direction to a position in which the carrier bracket 116 is about parallel to the oblique side wall of the hopper 8, as shown in Figure 2. In this position, whereby the guide member 102 is taken out of its position of operation, the clip 124 can be mounted in a hole 130 situated near the upper side of the fastening element 94. The clip 124 then is adjoining the lower side of the outstanding lip 122 in such a way that the out- of- operation position of the guide member is fixed.

The embodiment according to Figures 1 and 2 serves to spread material along the edge of a surface to be spread with material. In the embodiment according to Figures 1 and 2, the spreading implement is provided with two spreading members which are situated symmetrically with regard to the longitudinal plane, and each of which preferably spreads the material over equal distances on both sides of this plane during operation. Also in this embodiment, the guiding member 102 is mounted around a part of the spreading member which is nearest to the field edge along which the material has to be spread, without material being spread over this field edge.

The guide member 102 is adjoining about half of the whole spread angle 21 over which the material will be spread by the spreading member during operation of the implement. The whole spreading angle will be about 180°. The guide member 102 adjoins the spreading member over a spreading angle 83 of about 90°.

In dependence on the kind of the material which has to be spread, the position of the whole spreading angle 21 and therewith the part 83 of this spreading angle can shift around the axis of rotation of the spreading member more or less. The position of the guide member 102 relative to the spreading member can be adjusted in dependence on this shifting of the spreading angle around the axis of rotation of the spreading member. A favourable adjusting of the position of the guide member relative to the spreading member may be obtained by adjusting the guide member 102 at least substantially perpendicularly to the plane 111. Hereby the guide member will be adjusted sidewardly with regard to the normal direction 15 of operative travel of the spreading implement.

The position of the guide member 102 shown in Figure 1 may be used to spread material which is usually spread out. With this kind of material, the material having reached the spreading member, will be spread from along a first spreading line 127 (Figure 1) in the direction 17 of rotation up to a last spreading line, which will be separated from line 127 over an angle which is equal to the angle 21. The material will be spread then in the desired way with the position of the guide member 102 in the position as is shown in Figure 1. Hereby the material thrown out through the angle 83 will be guided along the guide elements 103 to 110 inclusive. The material moving along the spread line 127 will be picked up between the guide elements 109 and 110. The material spread by the spreading member over the angle 83 will be guided by the guide elements 109 to 103. Herewith the material leaving the spreading member through the angle 83 will be divided over at least a part of the width 82. The material which will be spread over the part of the angle 21 sidewards of the angle 83 will be divided without being guided by guiding elements and will be divided especially over the part of the width 82 which adjoins the foregoing, respectively following spreading track. The outer ends of the guiding elements 110, 109 and 108, which outer ends extend straight rearwardly, especially will serve to spread the material in the desired quantities along the field edge 31 so as to obtain the spread pattern 99.

When e.g. there will be spread material of a kind that moves more quickly over the spreading member and through the spreading arms thereof, then the first spreading line 127 will shift to the position shown in dotted lines in Figure 1, which dotted line is indicated by the reference number 128. To be able in this situation to catch all the material in the same way by the several guiding elements as is wished and as according to the situation with the usually used material to be spread, especially the inner ends of the guide elements adjoining the spreading member will have to be adjusted in a way which is conform the shifting of the first spread line 127, respectively the shifting of the spreading angle 21 over an angle 129. The outer ends of the guide elements, which are extending away from the spreading member, will preferably be held in their position relative to the direction 15 to be able to divide the material over a part of the width 82 and to obtain the spreading pattern 99. To hold these positions of the outer ends of the guiding elements relative to the direction 15, while the inner ends of the guide elements adjoining the spreading member 100 will still be able to catch the material in the desired way, can be obtained according to the invention in a very simple way by adjusting the guide member at least substantially perpendicularly to the plane 111. By adjusting the guide member in this way at least substantially perpendicularly to the plane 111, this adjustment need be carried out over only a short distance. The length of the holes 118 can be chosen in dependence on the distance over which the guiding member 102 have to be displaced at a maximum, for example in dependence on the different kinds of material to be spread by the spreading implement.

At least one of the holes 118 can be provided with one or more extensions so as to be able to reach two or more situations of the bolts 117 in the holes 48 in a quick manner. These extensions can co-operate with projections on the bolts 117. As is shown in Figure 1, one of the carrying plates 119 can be provided with rectangular extensions in the outer ends of the oblong hole 118. These square extensions can co-operate with a square projection on the bolts 117. These square projections of the bolts 117 can be mounted at will in one of the separated square extensions of the hole 118 by lifting the bolts when shifting the same from one end to the other end of the hole 118.

The projection 113 overlapping the guide element 110 will prevent that material is spread out in front of the spreading member 102.

## Claims

1. An implement for spreading material, comprising at least two spreader members (100) which are each drivable in opposite directions away from each other, as seen from the front of the machine about an upwardly extending rotary shaft (5, 6), the spreader members (100) being contiguous to at least one discharge member (10), by which during operation of the implement the material to be spread can be fed to the spreader members (100), the spreader members (100) and the discharge member (10) being of such a design and/or being arranged such relative to each other that in operation each one of the spreader members (100) spreads the material at least substantially equally far to both sides of a plane which extends into the normal direction of travel of the implement and is located substantially halfway between the spreader members (100), the implement further comprising a guide member (102) which is applicable about at least a portion of the circumference of one of the spreader members (100), along which portion the material is spreadable in operation by the spreader members (100), said guide member (102) comprising a plurality of guide elements (103 - 110), the guide elements being mounted such that they are able to collect at least that portion of the material that is spread by the spreader member (100) in a direction towards one side of the centre longitudinal plane and to divert the direction of spread of this material in such a manner that this material is spread near and towards the other side of the centre longitudinal plane, the guide member (102) being attached to the implement in such a manner that it can optionally be adjusted to one of at least two different working positions, in which it is contiguous to the spreader member circumference and in which material is to be spread over a strip along a field edge without material being spread beyond this field edge, characterized in that the guide member (102) is adjustable in a direction at least substantially perpendicular to the centre longitudinal plane of the implement.

2. An implement as claimed in claim 1, characterized in that the guide member (102) is contiguous to at least approximately half the circumferential angle of the spreader member (100) through which material is spread in operation by the spreader member (100).

3. An implement as claimed in claim 1 or 2, characterized in that the guide member (102) has one end located at least approximately near the centre longitudinal plane, and the guide member (102) has one end located at least approximately near a plane which extends vertically to the surface area to be spread and in the normal direction of operative travel and which contains the exterior side of the spreader member (100) located most remotely from the centre longitudinal plane.

4. An implement as claimed in any one of the preceding claims, characterized in that the guide member (102) includes a plate-like carrier (112) disposed at the upper sides of the guide elements (103 - 110).

5. An implement as claimed in any one of the preceding claims, characterized in that the spaces between the guide elements (103 - 110) are at least substantially open towards the lower end.

6. An implement as claimed in any one of the preceding claims, characterized in that the guide elements (103 - 110) are plate-like elements, the flat side of which is at least approximately in parallel with the rotary shaft (5) of the spreader member (100).

7. An implement as claimed in any one of the preceding claims, characterized in that the spread direction-determining portion of at least one guide element is adjustable and optionally lockable in one of at least two different positions relative to the collecting portion of the guide element.

8. An implement as claimed in any one of the preceding claims, characterized in that the guide member (102) is provided with guide elements (103 - 110) extending at least partly parallel to the longitudinal centre line of the implement.

9. A guide member corresponding to the guide member (102) as claimed in any one of the preceding claims and intended for use with an implement as claimed in any one of the preceding claims.

## Patentansprüche

1. Gerät zum Streuen von Gut, mit mindestens zwei Streugliedern (100), die von der Vorderseite der Maschine aus betrachtet jeweils in zueinander entgegengesetzten Richtungen um eine aufwärts gerichtete Drehachse (5, 6) antreibbar sind, wobei die Streuglieder (100) an mindestens ein Auslaßteil (10) angrenzen, von dem im Betrieb des Gerätes das Streugut den Streugliedern (100) zuzuführen ist, wobei die Streuglieder (100) und das Auslaßteil (10) derart ausgebildet und/oder relativ zueinander angeordnet sind, daß im Betrieb jedes der Streuglieder (100) das Gut zumindest im wesentlichen in gleicher Weite beiderseits einer Ebene ausstreut, die sich in Arbeitsrichtung des Gerätes und im wesentlichen in der Mitte zwischen den Streugliedern (100) erstreckt, wobei das Gerät ferner ein Führungsglied (102) aufweist, das zumindest an einen Teil des Umfanges eines der Streuglieder (100) anzulegen ist, wobei das Gut im Betrieb von den Streugliedern (100) an diesem Teil entlang auszustreuen ist, wobei das Führungsglied (102) mehrere Führungselemente (103 bis 110) aufweist, die aufgrund ihrer Anordnung geeignet sind, zumindest den Teil des Gutes aufzufangen, der von dem Streuglied (100) in Richtung auf eine Seite der Längsmittelebene ausgestreut wird und die Streurichtung dieses Gutes derart umzulenken, daß dieses Gut nahe und in Richtung auf die andere Seite der Längsmittelebene ausgestreut wird, wobei das Führungsglied (102) an dem Gerät derart angebracht ist, daß es wahlweise in eine von mindestens zwei unterschiedlichen Arbeitslagen einzustellen ist, in der es an die Peripherie des Streugliedes angrenzt, und in der Gut auf einen Bodenstreifen eines Feldrandes auszustreuen ist, ohne daß Gut über diesen Feldrand hinausgestreut wird,
dadurch gekennzeichnet, daß das Führungsglied (102) in eine Richtung einstellbar ist, die zumindest im wesentlichen senkrecht zur Längsmittelebene des Gerätes verläuft.

2. Gerät nach Anspruch 1,
dadurch gekennzeichnet, daß das Führungsglied (102) an dem Streuglied über mindestens etwa die Hälfte des Umfangswinkels des Streugliedes (100) anliegt, in dem im Betrieb Gut von dem Streuglied (100) ausgestreut wird.

3. Gerät nach Anspruch 1 oder 2,
dadurch gekennzeichnet, daß ein Ende des Führungsgliedes (102) zumindest annähernd nahe der Längsmittelebene und ein Ende des Führungsgliedes (102) zumindest annähernd nahe einer Ebene angeordnet ist, die sich senkrecht zu der zu bestreuenden Fläche in Arbeitsrichtung erstreckt, und in der die Außenseite des Streugliedes (100) liegt, das am weitesten von der Längsmittelebene entfernt ist.

4. Gerät nach einem der vorhergehenden Ansprüche,
dadurch gekennzeichnet, daß das Führungsglied (102) einen plattenartigen Träger (112) aufweist, der an den Oberseiten der Führungselemente (103 bis 110) angeordnet ist.

5. Gerät nach einem der vorhergehenden Ansprüche,
dadurch gekennzeichnet, daß die Zwischenräume zwischen den Führungselementen (103 bis 110) in Richtung auf das untere Ende zumindest im wesentlichen offen sind.

6. Gerät nach einem der vorhergehenden Ansprüche,
dadurch gekennzeichnet, daß die Führungselemente (103 bis 110) durch plattenartige Elemente gebildet sind, deren flache Seite sich zumindest annähernd parallel zur Drehachse (5) des Streugliedes (100) erstreckt.

7. Gerät nach einem der vorhergehenden Ansprüche,
dadurch gekennzeichnet, daß der die Streurichtung bestimmende Teil mindestens eines Führungselementes einstellbar und wahlweise in eine von mindestens zwei unterschiedlichen Positionen relativ zu dem Aufnahmeteil des Führungselementes festlegbar ist.

8. Gerät nach einem der vorherigen Ansprüche,
dadurch gekennzeichnet, daß das Führungsglied (102) mit Führungselementen (103 bis 110) versehen ist, die sich zumindest teilweise parallel zur Längsmittellinie des Gerätes erstrecken.

9. Führungsglied entsprechend dem Führungsglied (102) nach einem der vorhergehenden Ansprüche zur Verwendung in einem Gerät nach einem der vorhergehenden Ansprüche.

## Revendications

1. Outil pour épandre de la matière, comprenant au moins deux organes épandeurs (100) qui peuvent chacun être entraînés dans des directions opposées en s'éloignant l'une de l'autre, en étant vus de l'avant de la machine, autour d'un arbre de rotation (5, 6) s'étendant vers le haut, les organes épandeurs (100) étant contigus à au moins un organe de décharge (10) par lequel, pendant le travail de l'appareil, la matière à épandre peut être débitée aux organes épandeurs (100),les organes épandeurs (100) et l'organe de décharge (10) étant d'un dessin tel et/ou étant disposés l'un par rapport à l'autre de telle sorte que dans le travail chacun des organes épandeurs (100) épand de la matière au moins sensiblement à la même distance de part et d'autre d'un plan qui s'étend dans le sens normal de marche de l'appareil et qui est situé sensiblement à mi-distance entre les organes épandeurs (100), l'outil comprenant en outre un organe de guidage (102) qui est applicable autour d'au moins une partie de la circonférence d'un des organes épandeurs (100), partie le long de laquelle la matière est épandable pendant le travail par les organes épandeurs (100), ledit organe de guidage (102) comprenant une pluralité d'éléments de guidage (103 - 110), les éléments de guidage étant montés de telle sorte qu'ils sont aptes à recueillir au moins la fraction de la matière qui est épandue par l'organe épandeur (100) dans une direction vers un côté du plan médian longitudinal et à dévier le sens d'épandage de cette matière de telle manière que cette matière est épandue près et vers l'autre côté du plan médian longitudinal, l'organe de guidage (102) étant attaché à l'appareil de telle manière qu'il peut, au choix, être réglé sur une d'au moins deux différentes positions de travail, dans laquelle il est contigu à la circonférence de l'organe épandeur et dans laquelle la matière doit être épandue sur une bande le long du bord d'un champ sans que de la matière soit épandue au-delà de ce bord du champ,
**caractérisé** en ce que l'organe de guidage (102) est réglable dans une direction au moins sensiblement perpendiculaire au plan médian longitudinal de l'appareil.

2. Outil selon la revendication 1, caractérisé en ce que l'organe de guidage (102) est contigu à au moins approximativement la moitié de l'angle circonférentiel de l'organe épandeur (100), angle sur lequel la matière est épandue lors du travail par l'organe épandeur (100).

3. Outil selon la revendication 1 ou 2, caractérisé en ce que l'organe de guidage (102) a une extrémité située au moins approximativement près du plan médian longitudinal, et l'organe de guidage (102) a une extrémité située au moins approximativement près du plan qui s'étend verticalement par rapport à la surface devant recevoir l'épandage et dans le sens normal de marche du travail et qui contient le côté extérieur de l'organe épandeur (100) situé le plus loin du plan médian longitudinal.

4. Outil selon l'une quelconque des revendications précédentes, caractérisé en ce que l'organe de guidage (102) comporte un support (112) en forme de plaque disposé sur les côtés supérieurs des éléments de guidage (103 à 110).

5. Outil selon l'une quelconque des revendications précédentes, caractérisé en ce que les espaces entre les éléments de guidage (103 à 110) sont au moins substantiellement ouverts vers l'extrémité inférieure.

6. Outil selon l'une quelconque des revendications précédentes, caractérisé en ce que les éléments de guidage (103 à 110) sont analogues à des plaques dont le coté plat est au moins approximativement en parallèle avec l'arbre rotatif (5) de l'organe épandeur (100).

7. Outil selon l'une quelconque des revendications précédentes, caractérisé en ce que la partie d'au moins un élément de guidage déterminant la direction de l'épandage est réglable et peut être bloquée, au choix, dans une d'au moins deux positions différentes par rapport à la partie collectrice de l'élément de guidage.

8. Outil selon l'une quelconque des revendications précédentes, caractérisé en ce que l'organe de guidage (102) est muni d'éléments de guidage (103 à 110) s'étendant au moins partiellement parallèlement au plan médian longitudinal de l'outil.

9. Organe de guidage correspondant à l'organe de guidage (102) tel que revendiqué dans l'une quelconque des revendications précédentes et destiné à être utilisé avec un outil tel que revendiqué dans l'une quelconque des revendications précédentes.
